# EUROPEAN PATENT APPLICATION

(11) **EP 2 363 792 A1**
(43) Date of publication of application: **07.09.2011**
(21) Application number: 10460008.5
(22) Date of filing: 02.03.2010
(51) Int. Cl.: G06F 3/048

(54) **A controlling system with a polyhedral graphical user interface**

(71) Applicant: GryfTechnologia sp. z o.o., 12-200 Pisz (PL)
(72) Inventor: Kwiatkowski, Marcin, 05-091 Zabki (PL)
(74) Representative: Lukaszyk, Szymon

(57) **Abstract**

The invention relates to a controlling system for an electronic device having graphical output means (13) for displaying control parameters of said electronic device, image generating means for generating polyhedral graphical user interface which is being projected to a user on said graphical output means (13), input means (12) for inputting instructions from a user, said instructions comprising instructions to change said control parameters of said electronic device and instructions to change the appearance of said polyhedral graphical user interface. In order to make the system more intuitive for a user the polyhedral graphical user interface has a form of a right, regular prism (15) having five to ten faces (16) provided with control items and is rotatable around the central axis (151) thereof, wherein in a working state during inputting instructions to change the state of said control items, an active face (16) of said prismatic graphical user interface is projected on said graphical output means (13) as distortion-free solid body along with neighbouring faces for a viewpoint located outside of said prismatic graphical user interface (15) on a line perpendicular to said active face (16) and substantially in the centre thereof, while in response to an instruction to change the appearance of said prismatic graphical user interface (15), it rotates and is projected to the user on said graphical output means (13) in perspective view, and wherein said control parameters of said electronic device (2) are divided into functional groups, and each of said functional groups is assigned to a group of control items (17) of particular faces of said prismatic graphical user interface.

## Description

### Technical Field

The present invention relates to a controlling system for an electronic device having graphical output means for displaying control parameters of said electronic device, image generating means for generating polyhedral graphical user interface which is being projected to a user on said graphical output means, input means for inputting instructions from a user, said instructions comprising instructions to change said control parameters of said electronic device and instructions to change the appearance of said polyhedral graphical user interface.

### Background of the Invention

In order to facilitate user control of auxiliary electronic devices many forms of interfaces have been proposed so far. Most of them have a form of graphical user interfaces (GUI), many of which are presented on a flat display in 3 dimensions (with a so called Z-axis).

For example patent publication US 5515486 discloses a computer-implemented method for directing a computer system to independently rotate a polyhedron display container about several axes. The method includes the steps of displaying a panel container on a display and, in response to a first command from user controls to select a first front panel in the panel container, horizontally rotating the first front panel to a central column if the first front panel is not in the central column. The method also includes the step of in response to the first command to select a second front panel, vertically rotating the second front panel to the central row if the second front panel is not in the central row.

Patent application US 2003156146 discloses a mobile device comprising processing means for presenting on a display a three-dimensional polyhedron as graphical user interface. Different pieces of information that are to be presented to a user of the mobile device are associated to different facets of this polyhedron, and the visible facets of the polyhedron present at least a hint on a respectively associated piece of information to a user of the mobile device. The mobile device comprises means for enabling a user to cause the processing means to rotate the facets of the presented polyhedron.

Yet another methods and systems of this kind are disclosed in documents US 2007164989, US 2001028369, WO 2007008489, US 7134095 and US 6628313.

Nonetheless many of the prior art solutions have certain drawbacks such as fear of a user to misuse the GUI or accidentally damage the device being controlled, which results mainly from artificial mechanisms employed in GUI known from the state of art. These drawbacks are further related with an increasing number of parameters of the device being controlled and difficult access to these parameters.

It is an object of the present invention to provide a controlling system with a polyhedral graphical user interface which would be more intuitive for a user by resembling solutions that have been commonly used so far in non-computational applications and nature.

### Summary of the Invention

In order to accomplish the aforementioned and other objects it is provided a controlling system with a polyhedral graphical user interface which has a form of a right, regular prism having five to ten, preferably six, faces provided with control items and is rotatable around the central axis thereof. In a working state, during inputting instructions to change the state of said control items, an active face of said prism is projected on said graphical output means as distortion-free solid body along with neighbouring faces for a viewpoint located outside of said prismatic graphical user interface on a line perpendicular to said active face and substantially in the centre thereof, while in response to an instruction to change the appearance of said prismatic graphical user interface, it rotates and is projected to the user on said graphical output means in perspective view. Said control parameters of said electronic device are in turn divided into functional groups, and each of said functional groups is assigned to a group of control items of particular faces of said prismatic graphical user interface.

Since the prism of the graphical user interface is not subjected to perspective graphical deformation (i.e. the graphical perspective of the displayed prism corresponds to the visual perspective of the prism as it would have appeared to the user's eye), for a user it is perceived as a honeycombed structure giving him an impression of reliable, natural and thus friendly solution.

Proper distribution of the parameters according to their functionality makes the interface according to the invention even more intuitive for the user.

The interface according to the invention may be used as desktop in multitasking computer operating system, to control home automation, etc.

### Brief Description of the Drawings

These and other features of the invention shall be presented below in exemplary embodiments and in connection with the attached drawings on which:
Fig. 1 schematically shows an exemplary computer system implementing a controlling system according to the present invention;
Fig. 2 shows an exemplary prismatic graphical user interface in three normal working states, and
Fig.3 shows a prismatic graphical user interface in neighbouring states in a transitional, rotating state with an additional control panel.

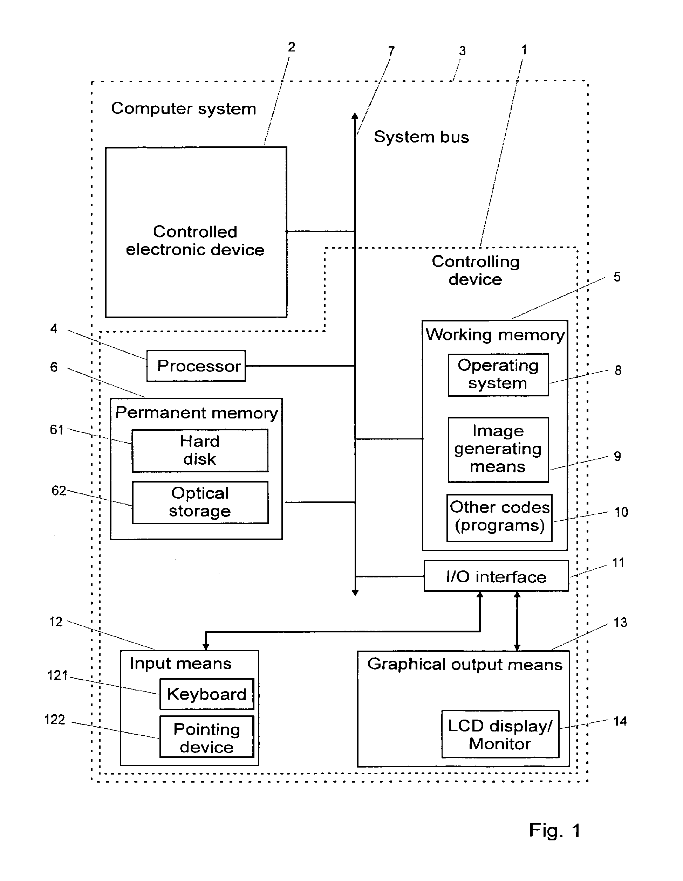

Fig. 1 schematically presents an embodiment of the invention in which both the controlling system 1 along with a controlled electronic device 2 are connected via a system bus of a single integrated computer system 3.

The computer system comprises at least one processor 4, a working memory 5 (such as DRAM), a permanent memory 6 such as disc storage 61, optical storage 62 and so forth, and a processor 4 that are connected with along with the other elements of the device 1 via system bus 7. The working memory 5 after booting up the system 3 may store an operating system 8, image generating software 9 as well as other programs 10. The skilled technician shall be aware however that each of the software components of the system may also be stored entirely or partially in permanent memory 6.

Although in this example the controlling system 1 and the controlled electronic device 2 share some hardware components, such as processor 4, working memory 5 and permanent memory 6, for a skilled person it shall be obvious that the controlled electronic device 2 may be an external or auxiliary component for the system 1 such as electronically connected (e.g. via a microcontroller) home automation (a so called domotics) system controlling house heating, ventilation and A/C (HVAC), lighting, security, etc.

The controlling system 1 further comprises a communication input/output interface 11 which enables to link the device 1 (e.g. via a cable, Bluetooth, computer network, etc.) with other devices. The I/O interface 11 receives data introduced via input devices 12 such as keyboard 121, computer mouse 122, etc. and outputs data e.g. on graphical output devices 13 such as LCD or CRT display 14. Obviously graphical output devices 13 may also be employed as input devices, e.g. in a form of a so called touch-screen.

When the controlling system 1 is in operation, image generating means 9 generate an image of a prismatic graphical user interface and project it on the graphical output means 13. The interface itself is coded in a binary form and stored in the working memory 10 of the controlling system 1. The binary data is processed by image generating means 9 in response to instructions inputted through the input means 12.

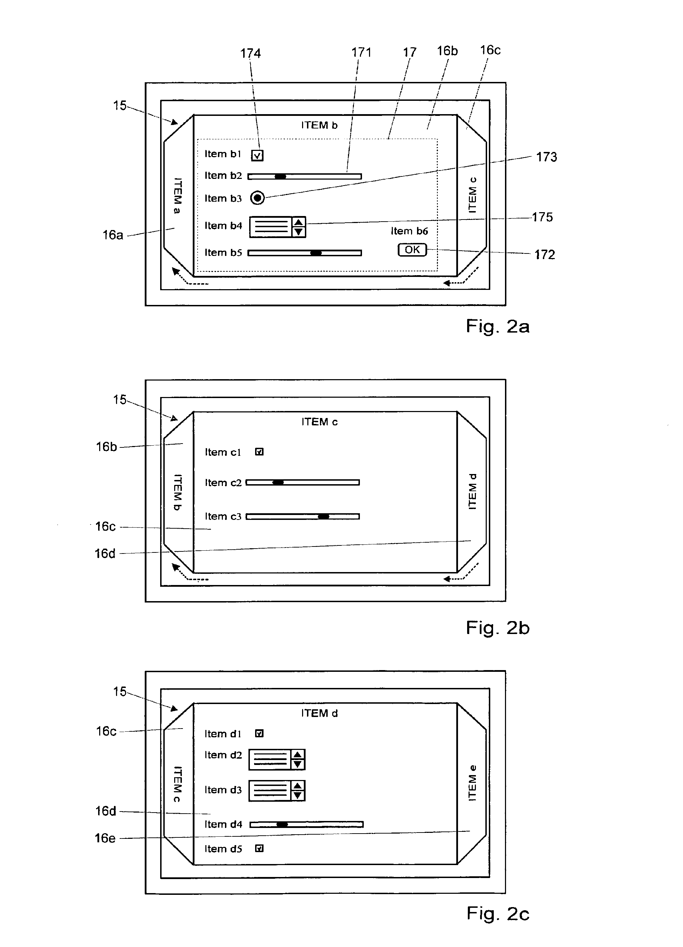

An exemplary prismatic graphical user interface 15 is shown in Fig. 2 in a normal working state. The interface has a form of a right, regular prism having six rectangular faces 16.

To each face of the prism a predetermined set of control parameters of said electronic device 2 is assigned. The control parameters are visualised on the faces 16 as control items 17 such as sliders 171, buttons 172, radio buttons 173, check boxes 174, drop down lists 175, edit boxes, etc. Persons skilled in the art shall be aware of many possibilities to visualise the control items 17 according to the function and state (such us Boolean (on/off), real values range, string lists, etc.) of the control parameters of the device 2.

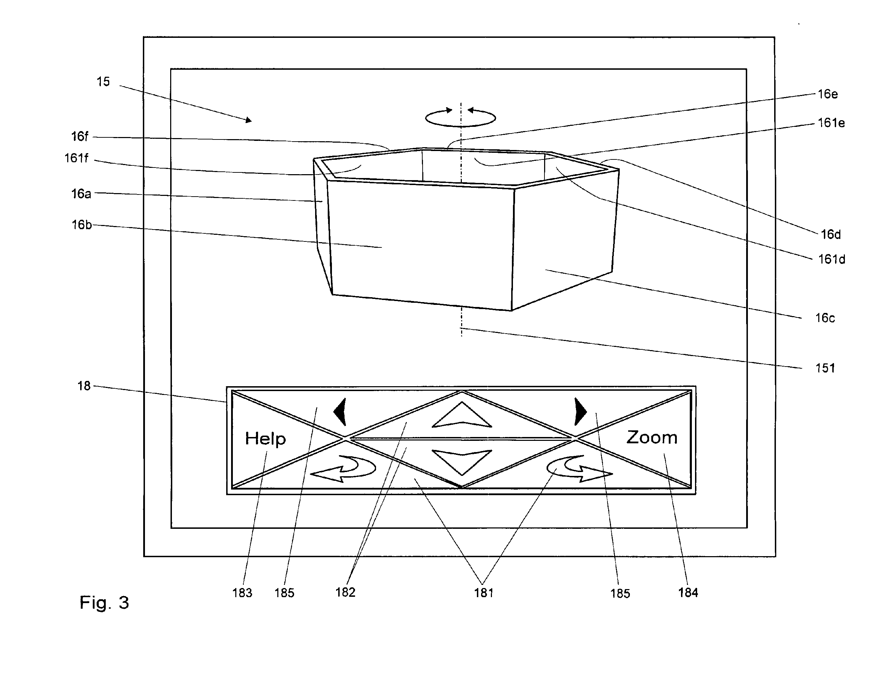

After inputting appropriate instructions enabling for choosing particular face 16, which shall be described in detail later with reference to Fig. 3, and projecting the active face, the user may input instructions to change the values of the control items 17 using input means 12.

A change of the graphical representations of the control items 17 of the interface 15 in effect change said control parameters of the controlled electronic device 2 as all changes made to the control item 17 are transmitted to the controlled electronic device 2 and physically change their state and/or a way of operation. The change of state of given control parameter may take place immediately after the change of state of particular control item 17, after accepting all the changes with regard to the given functional group of control item 17 by e.g. pressing appropriate button or receiving user's instruction to switch to neighbouring face.

In a working state of the GUI 15, as described above, an active face 16 is projected by generating means 9 for a viewpoint located outside of the GUI on a line perpendicular to the active face 16 and substantially in the centre of the active face 16. The active face is projected as distortion-free solid body so that the neighbouring faces surrounding the active face are visualised in the perspective projection as a trapezoids. In this working state three and only three faces are visible: active face and two neighbouring faces.

Figs. 2a-2c present three neighbouring faces 16a-16c of the prismatic GUI according to the invention in three working states. For each face a different functional group of control parameters of the electronic device 2 is assigned. The name of each group is visualized on a given face as a label.

In the view presented on Fig. 2a an active face 16b comprises control parameters belonging to the group denoted as ITEM b. The ITEM b group comprises six control items labelled ITEM b1-b6. The neighbouring faces 16a and 16c comprise labels indicating the names of the functional groups of control parameters assigned thereto, i.e. ITEM a and ITEM c respectively.

The neighbouring faces 16a and 16c may also comprise brief information representing the set of control parameters assigned to that face, complete or reduced set of control items distributed on that face or even information about further invisible faces.

In order to change any of control parameters assigned e.g. to group ITEM c the user instructs the image generating means 9 to change the appearance of the interface 15 and the interface rotates leftward, so that the face 16c with group labelled ITEM c becomes an active face (Fig. 2b). On the left side it is now neighboured by previously active face 16b and on the right side it is neighboured by the previously not visualised face 16d.

Further leftward rotation of the prism 15 shall reveal further faces 16d (Fig. 2c) and so forth until after six consecutive rotations the face 16b shall again become the active face.

Fig. 3 shows the prismatic interface 15 shown in Fig. 2 in a transitional state between two neighbouring working positions, which takes place in response to the user instructions to change its appearance.

In this transitional the interface virtually rotates around the central axis 151 in order to switch the active face to a given neighbouring one, wherein the rotation stops in predetermined points located on lines perpendicular to the faces which cross its centres. From a user perspective the rotation resembles rotation of a natural hexagonal prism and is highly intuitive.

Furthermore, in this rotational movement internal sides 161d, 161e and 161f of certain faces 16d, 16e and 16f become visible and may thus be employed to visualise the control items distributed on that faces labels indicating the names of the functional groups of control parameters assigned thereto.

At the bottom of the interface 15 an additional control panel 18 is displayed. The panel 18 comprises keys enabling a user for inputting instructions to switch to another face 16 and change the state of particular control items 17.

Two keys 181 labelled with rounded arrows are used to effect rotation of the interface prism 15, two keys 182 labelled with up- and down-arrows enable user to switch focus to subsequent control item displayed on active face, key 183 is used to display suitable context help menu related with currently active focused control item 17, key 184 is "Zoom" button for zooming a view on the interface 15, while two keys 185 labelled with left- and right-arrows effect the change of state (eg. increase/decrease, on/off) of focused control item 17. The control panel 18 may also have special keys such as zoom in, zoom out, help button etc.

Obviously instructions to rotate the prism 15 and to change the state of particular control items 17 may be introduced via computer keyboard as shortcuts or, using gesture recognition technology, via appropriate input devices (such as touch screen).

The above embodiments of the present invention are merely exemplary. The figures are not necessarily to scale and some features may be exaggerated or minimized. These and other factors however should not be considered as limiting the spirit of the invention, the intended scope of protection of which is indicated in appended claims.

## Claims

1. A controlling system (1) for an electronic device (2) having graphical output means (13) for displaying control parameters of said electronic device (2),
image generating means (9) for generating polyhedral graphical user interface which is being projected to a user on said graphical output means (13), input means (12) for inputting instructions from a user, said instructions comprising instructions to change said control parameters of said electronic device (2) and instructions to change the appearance of said polyhedral graphical user interface,
**characterised in that**,
the polyhedral graphical user interface has a form of a right, regular prism (15) having five to ten faces (16) provided with control items (17) and is rotatable around the central axis (151) thereof, wherein
in a working state, during inputting instructions to change the state of said control items (17), an active face (16) of said prism is projected on said graphical output means (13) as distortion-free solid body along with neighbouring faces for a viewpoint located outside of said prismatic graphical user interface (15) on a line perpendicular to said active face (16) and substantially in the centre thereof, while
in response to an instruction to change the appearance of said prismatic graphical user interface (15), it rotates and is projected to the user on said graphical output means (13) in perspective view, and wherein
said control parameters of said electronic device (2) are divided into functional groups, and each of said functional groups is assigned to a group of control items (17) of particular faces of said prismatic graphical user interface.

2. A controlling system according to Claim 1, **characterised in that** said prism (15) of the polyhedral graphical user interface has six faces (16).

3. A controlling system according to Claim 1 or 2, **characterised in that** in said perspective view of said prismatic graphical user interface (15) the information about the content of the hidden faces (16) is displayed on internal sides (161) thereof.

4. A controlling system according to any of preceding Claims, **characterised in that** said instruction to rotate the prism of said prismatic graphical user interface (15) and/or said instruction to change the state of particular control items (17) is inputted from a user using gesture recognition technology.
